# EUROPÄISCHE PATENTSCHRIFT

(11) **EP 3 689 545 B1**
(45) Veröffentlichungstag und Bekanntmachung des Hinweises auf die Patenterteilung: **07.06.2023**
(21) Anmeldenummer: 19210382.8
(22) Anmeldetag: 20.11.2019
(51) Int. Cl.: B25B 1/24

(54) **SPANNBACKE ZUM SPANNEN EINES WERKSTÜCKS**
JAW FOR TENSIONING A WORKPIECE
MÂCHOIRE DE SERRAGE PERMETTANT DE SERRER UNE PIÈCE

(30) Priorität: 29.01.2019 DE 102019102167
(43) Veröffentlichungstag der Anmeldung: 05.08.2020
(73) Patentinhaber: Gressel AG, 8355 Aadorf (CH)
(72) Erfinder: SCHLÜSSEL, Marcel, 8303 Bassersdorf (CH)
(74) Vertreter: Charrier Rapp & Liebau

(56) Entgegenhaltungen:
- EP-A1- 2 724 817
- EP-A2- 1 375 069
- DE-U1-202014 104 577
- US-A- 824 394
- US-A- 2 978 966
- US-A1- 2013 161 890

## Beschreibung

Die Erfindung betrifft eine Spannbacke zum Spannen eines Werkstücks nach dem Oberbegriff des Anspruchs 1.

Eine derartige Spannbacke ist aus der EP 1 375 069 A2 bekannt. Die dort offenbarte Spannvorrichtung weist ein als Zylinder ausgebildetes bewegliches Spannelement und ein festes Spannelement auf. Das feste Spannelement enthält ein Gehäuse, das werkstückseitig zwei übereinander angeordnete, schräg nach unten führende Sackbohrungen enthält. In die Sackbohrungen ist jeweils eine nach außen durch eine Druckfeder vorgespannte Spannbacke eingesetzt.

Bei einer aus der US 824 394 A bekannten Spannbacke sind in Gewindebohrungen eines Backenkörpers mehrere schräg nach unten geneigte, individuell verstellbare Halteschrauben mit einem spitzen Kopf zum Andrücken eines Werkstücks an eine feste Spannbacke angeordnet.

Eine weitere Spannbacke ist aus der EP 2 724 817 A1 bekannt. Dort sind in der zum Werkstück gewandten Spannfläche eines Grundkörpers mehrere dreieckförmige Aussparungen eingearbeitet, in die jeweils ein dreieckiger Spanneinsatz aus gesintertem Vollhartmetallwerkstoff eingesetzt ist. Bei einer solchen Spannbacke ist jedoch sowohl die Fertigung des Grundkörpers als auch die Herstellung der Spanneinsätze relativ aufwändig und daher mit entsprechenden Kosten verbunden. Außerdem erfordern solche dreieckigen Spanneinsätze in der Tiefe einen relativ großen Bauraum, wodurch die seitliche Zugänglichkeit eingeschränkt werden kann.

Aus der EP 0 761 382 A1 ist eine Einrichtung zur Lagefixierung von Teilen in Haltevorrichtungen mit einem Grundkörper und in diesem angeordneten Passstiften bekannt. Die Passstifte sind in rechtwinklig zu einer Spannfläche des Grundkörpers verlaufenden Bohrungen eingesetzt.

In der AT 288 283 B ist eine Vorrichtung zum geradlinigen Einspannen vorzugsweise zylindrischer Werkstücke gleichen Durchmessers zwischen parallel zueinander verschiebbaren Spannbacken offenbart. Hierzu weist mindestens eine Spannbacke geradlinig in Reihe angeordnete kerbförmige Klemmkörper auf.

Aufgabe der Erfindung ist es, eine Spannbacke der eingangs genannten Art zu schaffen, die eine optimale Spannwirkung gewährleistet, günstig herstellbar ist und eine verbesserte Zugänglichkeit auch bei geringen Spannhöhen ermöglicht.

Diese Aufgabe wird durch eine Spannbacke mit den Merkmalen des Anspruchs 1 gelöst. Zweckmäßige Ausgestaltungen und vorteilhafte Weiterbildungen der Erfindung sind in den Unteransprüchen angegeben.

Bei der erfindungsgemäßen Spannbacke sind die Spanneinsätze in Form von gegenüber einer Stirnfläche des Grundkörpers vorstehenden und zu einer unteren Grundfläche des Grundkörpers geneigten Zylinderstiften ausgebildet, die eine Spannkante zum Eindrücken der Spanneinsätze in das Werkstück bilden. Dadurch entsteht ein keilförmiges Spannprofil mit oberen und unteren Prägeflächen, die sich in das Werkstück drücken und für eine gute Halterung sorgen. Durch die schräge Anordnung der stiftförmigen Spanneinsätze werden diese nur in Druckrichtung belastet und weisen keine oder nur eine geringe Biegebelastung auf. Die als Zylinderstifte ausgeführten Spanneinsätze enthalten eine einfache Geometrie und sind dadurch einfach herstellbar. Auch deren Montage in einem Grundköper ist einfach und mit wenig Aufwand möglich. Die Spanneinsätze können z.B. in einfach und kostengünstig herstellbare Löcher im Grundkörper eingesetzt werden. Die vorzugsweise aus Sintermetall oder Sinterkeramik, bestehenden Spanneinsätze können z.B. eine Härte von bis zu HRC 90 aufweisen, so dass auch Werkstücke aus gehärtetem Stahl sicher gespannt werden können. Die kostengünstig herstellbaren Spanneinsätze sind einfach montierbar und können bei Bedarf schnell und einfach ausgetauscht werden.

In einer besonders zweckmäßigen Ausführung sind die Mittelachsen der als Zylinderstifte ausgeführten Spanneinsätze unter einem Winkel von 40° bis 60° zur Grundfläche des Grundkörpers geneigt. Wenn die Mittelachsen der als Zylinderstifte ausgeführten Spanneinsätze z.B. unter einem Winkel von 45° zur Grundfläche des Grundkörpers geneigt sind, ergeben sich nahezu identische obere und untere Prägeflächen, so dass ein neutraler Spannungseingriff ohne Niederzug entsteht. Durch Neigungen von mehr als 45° kann an den Spanneinsätzen eine nach unten wirkende Kraftkomponente erzeugt werden, durch welche die Werkstücke nach unten gegen eine Auflagefläche gedrückt werden können.

Die als Zylinderstifte ausgeführten Spanneinsätze sind vorzugsweise in mehreren an der Stirnfläche des Grundkörpers nebeneinander angeordneten schrägen Aufnahmeöffnungen angeordnet. Die Aufnahmeöffnungen können als einfache zylindrische Löcher ausgeführt sein und sind dadurch einfach herstellbar.

Eine besonders sichere Halterung der Spanneinsätze am Grundkörper kann dadurch erreicht werden, dass Spanneinsätze durch Kleben, Löten, Pressen, Verklemmen oder dgl. in den Aufnahmeöffnungen des Grundkörpers befestigt sind. In einer möglichen Ausführung können die Spanneinsätze z.B. durch eine in den Grundkörper eingedrückte Kerbe an dem Grundkörper gehalten sein.

Die Aufnahmeöffnungen können zweckmäßigerweise als Sacklöcher ausgeführt sein. An den Aufnahmeöffnungen können aber auch Ausstoßbohrungen vorgesehen sein. Dadurch können die Spanneinsätze bei Bedarf einfach gewechselt bzw. ausgetauscht werden.

Eine besonders scharfe Spannkante kann dadurch erreicht werden, dass die als Zylinderstifte ausgebildeten Spanneinsätze eine plane äußere Stirnfläche aufweisen. Die äußere Stirnfläche der stiftförmigen Spanneinsätze kann aber auch leicht kegelig oder gewölbt sein.

Zum Spannen mit niedriger Spannhöhe kann an dem Grundkörper unterhalb der Spanneinsätze eine Auflagefläche zur Auflage des Werkstücks vorgesehen sein. Zum Spannen größerer Werkstücke kann aber auch auf eine solche Auflagefläche verzichtet werden. Die Stirnfläche kann dann ohne Abstufung rechtwinklig zur Grundfläche verlaufen.

In einer weiteren zweckmäßigen Ausführung können die stiftförmigen Spanneinsätze in einer konkaven Ebene angeordnet sein, sodass die äußeren Spanneinsätze tiefer in das Werkstück eingreifen als die inneren Spanneinsätze. Dadurch können die beim Spanvorgang entstehenden Kippmomente von den äußeren Spanneinsätzen optimal aufgenommen werden. Die Spanneinsätze können aber auch in einer geraden Ebene angeordnet sein.

Die Spanneinsätze können in einer Reihe oder mehreren Reihen angeordnet sein.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: ein erstes Ausführungsbeispiel einer Spannbacke in einer Vorderansicht;
- **Figur 2**: den oberen Teil der in Figur 1 gezeigten Spannbacke in einer Perspektive;
- **Figur 3**: eine Schnittansicht der Spannbacke entlang der Linie A-A von Figur 1;
- **Figur 4**: eine vergrößerte Darstellung des oberen Bereichs der Ansicht von Figur 3;
- **Figur 5**: die Spannbacke von Figur 1 in einer Draufsicht;
- **Figur 6**: die in Figur 4 gezeigte Detailansicht einer Spannbacke mit Werkstück;
- **Figur 7**: eine Draufsicht der Spannbacke von Figur 1 mit Werkstück;
- **Figur 8**: eine Detailansicht einer zweiten Ausführung einer Spannbacke;
- **Figur 9**: eine Detailansicht einer dritten Ausführung einer Spannbacke;
- **Figur 10**: eine Detailansicht einer vierten Ausführung einer Spannbacke;
- **Figur 11**: ein fünftes Ausführungsbeispiel einer Spannbacke in einer Seitenansicht und
- **Figur 12**: die Spannbacke von Figur 11 in einer Draufsicht.

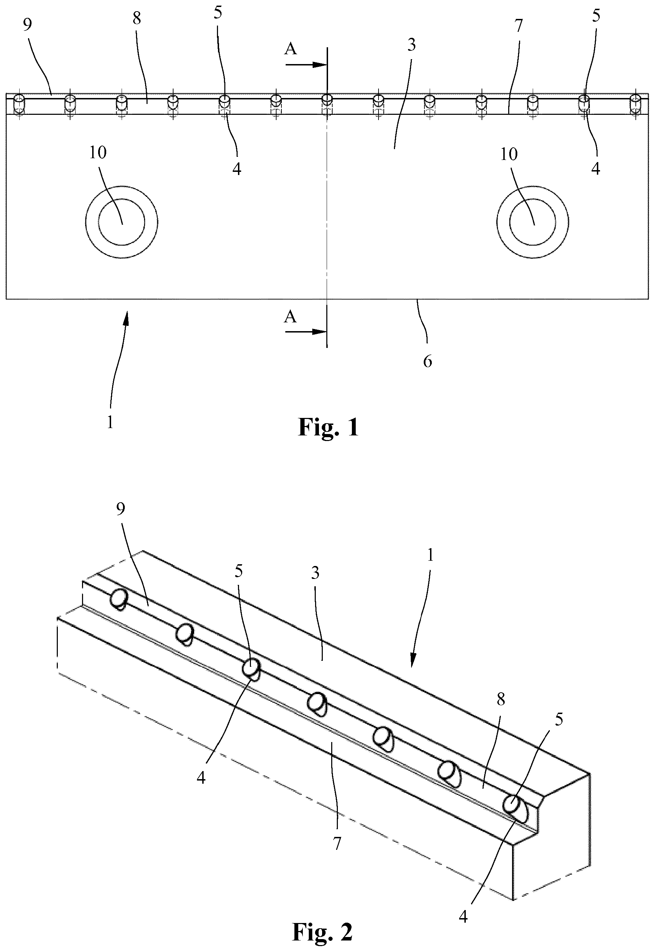

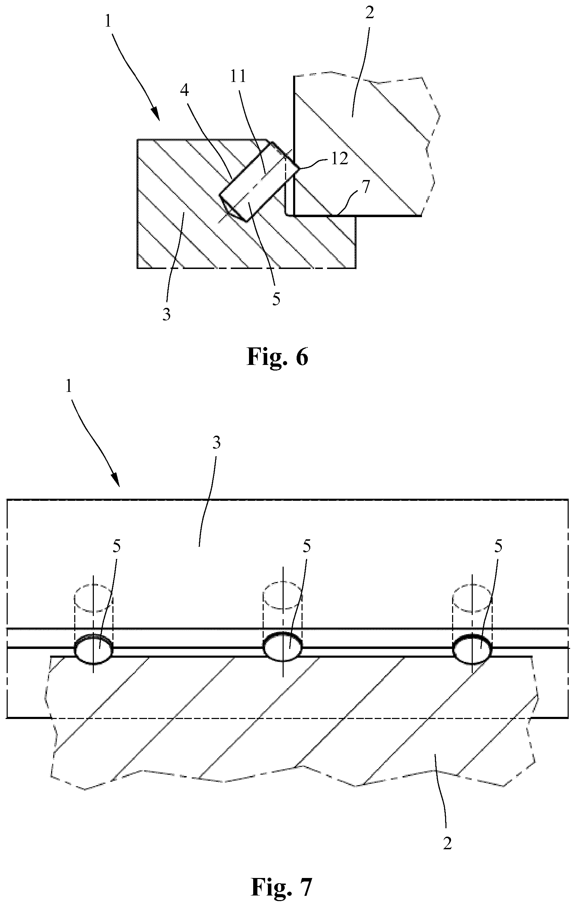

In den Figuren 1 bis 7 ist ein erstes Ausführungsbeispiel einer Spannbacke 1 zum Spannen eines in Figur 6 dargestellten Werkstücks 2 gezeigt. Die Spannbacke 1 enthält einen Grundkörper 3 und mehrere in Aufnahmeöffnungen 4 des Grundkörpers 3 angeordnete stiftförmige Spanneinsätze 5, die aus einem Sinterwerkstoff, vorzugsweise aus Sintermetall oder Sinterkeramik, bestehen.

Der Grundkörper 3 der Spannbacke 1 weist an seiner Unterseite eine in Spannrichtung der Spannbacke 1 verlaufende untere Grundfläche 6 und an seiner dem Werkstück 2 zugewandten Seite einem stufenförmigen Absatz mit einer zur Grundfläche 6 parallelen Auflagefläche 7, einer dazu rechtwinkligen Stirnfläche 8 und einer Abschrägung 9 auf. An dem stufenförmigen Absatz des Grundkörpers 3 sind mehrere nebeneinander angeordnete schräge Aufnahmeöffnungen 4 zur Aufnahme der in Form von Zylinderstiften ausgeführten Spanneinsätze 5 vorgesehen. Bei der in den Figuren 1 bis 7 gezeigten Ausführung ist die Spannbacke 1 als auswechselbare Spannbacke ausgebildet. Der Grundkörper 3 ist daher in Form einer Platte ausgebildet und weist zwei in Figur 1 gezeigte Bohrungen 10 für Befestigungsschrauben zur lösbaren Befestigung der Spannbacke 1 an den gegeneinander verfahrbaren Backen eines Schraubstocks oder einer anderen Spannvorrichtung auf. Der Grundköper 3 kann aber auch von oben verschraubt werden oder als Backe eines Schraubstocks z.B. in Form eines Blocks oder dgl. ausgeführt sein.

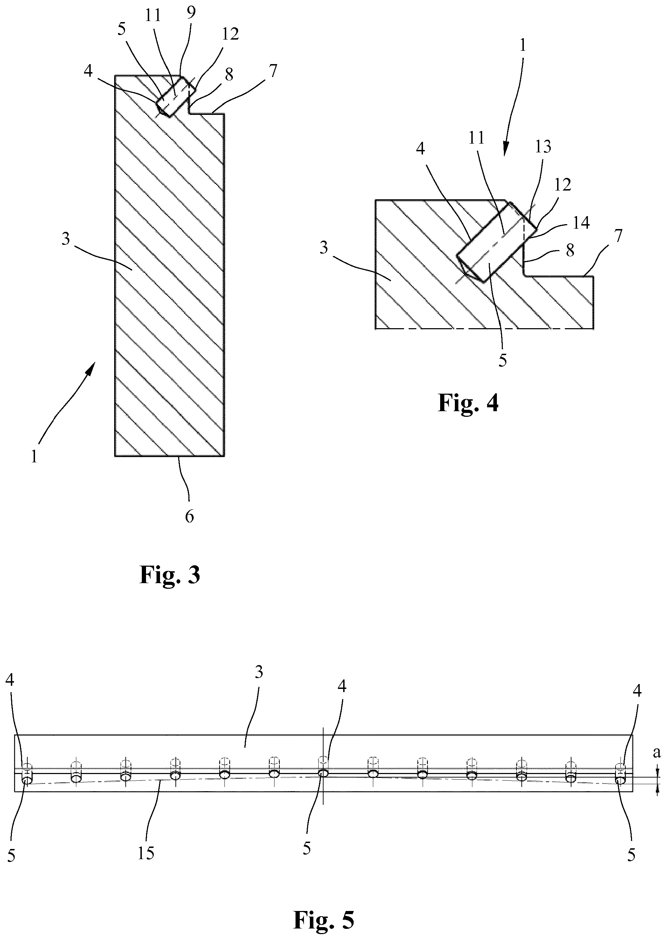

Wie aus den Figuren 3 und 4 hervorgeht, sind die als Zylinderstifte ausgeführten Spanneinsätze 5 derart in dem Grundkörper 3 angeordnet, dass deren Mittelachse 11 schräg zur vorderen Stirnfläche 8 des Grundkörpers 3 und auch schräg zur unteren Grundfläche 6 verläuft. Die als Bohrungen ausgeführten lochförmigen Aufnahmeöffnungen 4 für die hier schräg nach oben ragenden stiftförmigen Spanneinsätze 5 sind gegenüber der vorderen Stirnfläche 8 schräg nach unten geneigt. Die stiftförmigen Spanneinsätze 5 weisen an ihren gegenüber der Stirnfläche 8 vorstehenden Enden eine Kante 12 zum Eindrücken in das Werkstück auf. Bei der in Figur 4 gezeigten Ausführung wird die Kante 12 zwischen einer planen äußeren Stirnfläche 13 und der Mantelfläche 14 des stiftförmigen Spanneinsatzes 5 gebildet. Durch eine plane äußere Stirnfläche 13 wird eine besonders scharfe Kante 12 zum guten Einschneiden in das Werkstück 2 erreicht. Die äußere Stirnfläche 13 der stiftförmigen Spanneinsätze 5 kann aber auch leicht kegelig oder gewölbt sein.

In der Draufsicht von Figur 5 ist erkennbar, dass die stiftförmigen Spanneinsätze 5 nicht in einer geraden, sondern einer konkaven Ebene 15 angeordnet sind, sodass die äußeren Spanneinsätze 5 tiefer in das Werkstück eingreifen als die inneren Spanneinsätze 5. Dadurch können die beim Spanvorgang entstehenden Kippmomente von den äußeren Spanneinsätzen 5 optimal aufgenommen werden. Zwischen dem inneren Spanneinsatz 5 und den jeweils äußeren Spanneinsätzen 5 ist ein Abstand a vorhanden. Dies kann z.B. durch unterschiedliche Ausrichtungen und unterschiedlich weit vorstehende Spanneinsätze 5 erreicht werden. Die Spanneinsätze 5 können aber auch in einer geraden Ebene angeordnet sein.

Wie aus den Figuren 6 und 7 ersichtlich ist, werden die stiftförmigen Spanneinsätze 5 beim Verfahren der Spannbacken 1 gegen das Werkstück 2 in Art eines Keils in die Oberfläche der Werkstücks 2 eingedrückt. Dadurch wird eine guter Grip der Spannbacken 1 und eine sichere Halterung des Werkstücks 2 erreicht.

Bei der in den Figuren 1 bis 7 gezeigten Ausführung weisen die Mittelachsen 11 der stiftförmigen Spanneinsätze 5 eine Neigung von 45° zur Grundfläche 6 bzw. zur Spannrichtung der Spannbacke 1 auf. Dadurch haben die durch die von der äußeren Stirnfläche 13 und der Mantelfläche 14 des stiftförmigen Spanneinsatzes 5 gebildeten Prägeflächen dieselbe Neigung, sodass eine neutrale Spannung ohne Niederzug erreicht werden kann. Bei größeren Neigungen der Mittelachsen 11 wird dagegen die untere Prägefläche größer als die obere Prägefläche. Das Werkstück wird dadurch beim Eindrücken der Spanneinsätze 5 nach unten gegen die Auflagefläche 7 gezogen. In bevorzugter Weise sind die Mittelachsen 11 der stiftförmigen Spanneinsätze 5 unter einem Winkel von 45° bis 60° gegenüber der Grundfläche 6 des Grundkörpers 3 bzw. der Spannrichtung der Spannbacke 1 geneigt. Eine am Grundkörper 3 unterhalb der Spanneinsätze 5 vorgesehene Auflagefläche 7 ist besonders gut für die Auflage nicht zu weit vorstehender Werkstücke geeignet. Zum Spannen größerer Werkstücke kann aber auch auf eine solche Auflagefläche verzichtet werden. Die Stirnfläche 8 kann dann ohne Abstufung rechtwinklig zur Grundfläche 6 verlaufen. Damit auch niedrige Spannhöhen gespannt werden können, weisen die vorzugsweise als Zylinderstifte ausgebildeten stiftförmigen Spanneinsätze 5 einen kleinen Durchmesser von 0,5 bis 5 mm, bevorzugt ca. 2 mm auf.

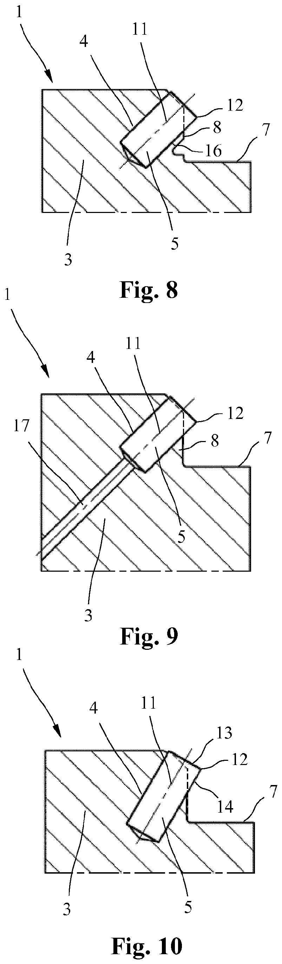

Die Befestigung der stiftförmigen Spanneinsätze 5 in den Aufnahmeöffnungen 4 des Grundkörpers 3 kann durch Verkleben, Verpressen, Verlöten oder auf andere geeignete Weise erfolgen. In einer vorteilhaften Ausführung können die Spanneinsätze 5 derart ausgeführt sein, dass sie durch Verformung des Grundkörpers 3 z.B. durch Eindrücken einer in Figur 8 gezeigten Kerbe 16 oder Bohrung kraftschlüssig gehalten werden.

Um das Auswechseln der Spanneinsätze 5 zu erleichtern, kann in dem Grundkörper 3 eine in Figur 9 gezeigte Ausstoßbohrung 17 vorgesehen sein. Über die zur Aufnahmeöffnung 4 koaxiale Ausstoßbohrung 17 kann ein Spanneinsatz 5 bei Bedarf einfach ausgestoßen und gewechselt werden.

In Figur 10 ist ein Ausführungsbeispiel einer Spannbacke 1 mit einem Grundkörper 3 und einem stiftförmigen Spanneinsatz 5 gezeigt, dessen Mittelachse 11 mit einem Winkel von 60° zur Grundfläche 7 geneigt ist. Aus dieser Darstellung ist erkennbar, dass die von der äußeren Stirnfläche 13 des Spanneinsatzes 5 gebildete obere Prägefläche kleiner als die von der Mantelfläche 14 des Spanneinsatzes 5 gebildete untere Prägefläche ist.

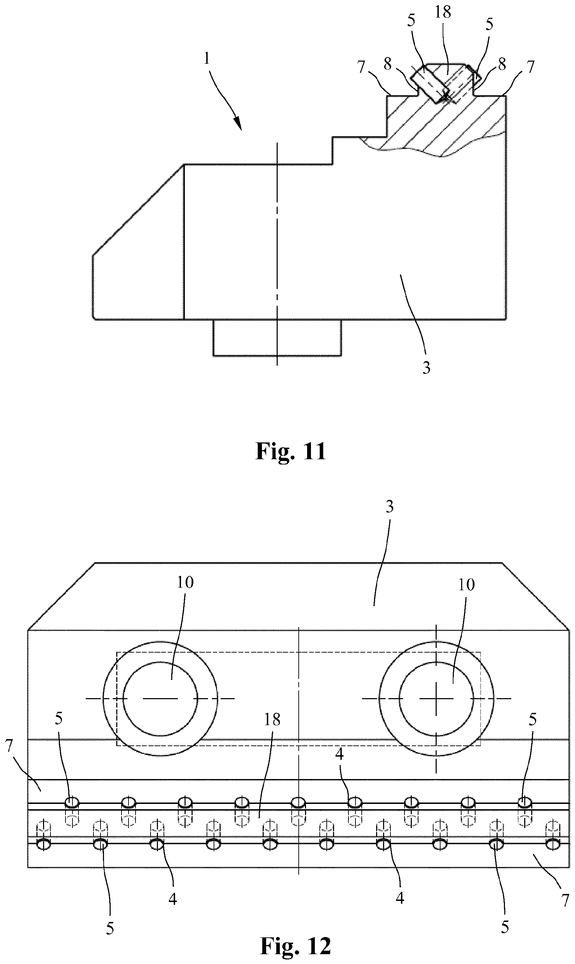

Die Figuren 11 und 12 zeigen ein weiteres Ausführungsbeispiel einer Spannbacke 1 mit einem Grundkörper 3 und mehreren in Aufnahmeöffnungen 4 des Grundkörpers 3 angeordneten stiftförmigen Spanneinsätzen 5. Im Unterschied zu den vorherigen Ausführungen ist hier der Grundkörper 3 nicht als auswechselbare Platte, sondern als ein auf einem Führungsteil befestigbarer Spannblock ausgebildet. Der Grundkörper 3 kann bei Bedarf umgedreht werden und weist einen nach oben vorstehenden Steg 18 mit zwei zu entgegengesetzten Seiten weisenden Stirnflächen 8 auf. An dem Steg 18 sind zu beiden Seiten vorstehende, jeweils schräg nach oben ragende, stiftförmige Spanneinsätze 5 vorgesehen. Die an den beiden Stirnflächen 8 angeordneten Spanneinsätze 5 sind hier zueinander versetzt.

### Bezugszeichenliste

- 1: Spannbacke
- 2: Werkstück
- 3: Grundkörper
- 4: Aufnahmeöffnung
- 5: Spanneinsatz
- 6: Untere Grundfläche
- 7: Auflagefläche
- 8: Stirnfläche
- 9: Abschrägung
- 10: Bohrung
- 11: Mittelachse
- 12: Kante
- 13: Stirnfläche
- 14: Mantelfläche
- 15: Konkave Ebene
- 16: Kerbe
- 17: Ausstoßbohrung
- 18: Steg

## Patentansprüche

1. Spannbacke (1) zum Spannen eines Werkstücks (2), mit einem Grundkörper (3) und mehreren in Aufnahmeöffnungen (4) des Grundkörpers (3) angeordneten Spanneinsätzen (5), die in Form von gegenüber einer vorderen Stirnfläche (8) des Grundkörpers (3) vorstehenden und gegenüber einer unteren Grundfläche (6) des Grundkörpers (3) schräg nach oben ragenden Zylinderstiften ausgebildet sind, **dadurch gekennzeichnet, dass** die als Zylinderstifte ausgebildeten Spanneinsätze (5) aus einem Sinterwerkstoff bestehen und an ihren gegenüber der vorderen Stirnfläche (8) des Grundkörpers (3) vorstehenden Enden eine zum Eindrücken der Spanneinsätze (5) in das Werkstück (2) ausgebildete Kante (12) aufweisen.

2. Spannbacke (1) nach Anspruch 1, **dadurch gekennzeichnet, dass** die Mittelachsen (11) der als Zylinderstifte ausgeführten Spanneinsätze (5) unter einem Winkel von 40° bis 60° zur Grundfläche (6) des Grundkörpers (3) geneigt sind.

3. Spannbacke (1) nach Anspruch 1 oder 2, **dadurch gekennzeichnet, dass** die als Zylinderstifte ausgeführten Spanneinsätze (5) in mehreren an der Stirnfläche (8) des Grundkörpers (3) nebeneinander angeordneten schrägen Aufnahmeöffnungen (4) angeordnet sind.

4. Spannbacke (1) nach einem der Ansprüche 1 bis 3, **dadurch gekennzeichnet, dass** die Spanneinsätze (5) durch Kleben, Löten, Pressen oder Verklemmen in den Aufnahmeöffnungen (4) des Grundkörpers (3) befestigt sind.

5. Spannbacke (1) nach einem der Ansprüche 1 bis 4, **dadurch gekennzeichnet, dass** die Spanneinsätze (5) durch eine in den Grundkörper (3) eingedrückte Kerbe (16) an dem Grundkörper (3) gehalten sind.

6. Spannbacke (1) nach einem der Ansprüche 1 bis 5, **dadurch gekennzeichnet, dass** die Aufnahmeöffnungen (4) als schräge Sacklöcher ausgebildet sind.

7. Spannbacke (1) nach einem der Ansprüche 1 bis 6, **dadurch gekennzeichnet, dass** an den Aufnahmeöffnungen (4) eine Ausstoßbohrung (17) vorgesehen ist

8. Spannbacke (1) nach einem der Ansprüche 1 bis 7, **dadurch gekennzeichnet, dass** die als Zylinderstifte ausgeführten Spanneinsätze (5) eine plane äußere Stirnfläche (13) aufweisen.

9. Spannbacke (1) nach einem der Ansprüche 1 bis 8, **dadurch gekennzeichnet, dass** der Grundköper (3) unterhalb der Spanneinsätze (5) eine Auflagefläche (7) zur Auflage des Werkstücks (2) enthält.

10. Spannbacke (1) nach einem der Ansprüche 1 bis 9, **dadurch gekennzeichnet, dass** die Spanneinsätze (5) in einer konkaven Ebene (15) angeordnet sind.

11. Spannbacke (1) nach einem der Ansprüche 1 bis 10, **dadurch gekennzeichnet, dass** die Spanneinsätze (5) in einer Reihe oder mehreren Reihen angeordnet sind.

## Claims

1. Clamping jaw (1) for clamping a workpiece (2), having a base body (3) and several clamping inserts (5) arranged in receiving openings (4) of the base body (3) which are configured in the form of cylindrical pins projecting with respect to a front end-face surface (8) of the base body (3) and protruding at an angle upwards with respect to a lower base surface (6) of the base body (3), **characterised in that** the clamping inserts (5) configured as cylindrical pins consist of a sintered material and have at their ends projecting with respect to the front end-face surface (8) of the base body (3), an edge (12) configured for pressing the clamping inserts (5) into the workpiece (2).

2. Clamping jaw (1) according to claim 1, **characterised in that** the centre axes (11) of the clamping inserts (5) designed as cylindrical pins are inclined at an angle of 40° to 60° to the base surface (6) of the base body (3).

3. Clamping jaw (1) according to claim 1 or 2, **characterised in that** the clamping inserts (5) designed as cylindrical pins are arranged in several inclined receiving openings (4) arranged next to one another at the end-face surface (8) of the base body (3).

4. Clamping jaw (1) according to one of claims 1 to 3, **characterised in that** the clamping inserts (5) are attached in the receiving openings (4) of the base body (3) by adhesion, soldering, pressing or jamming.

5. Clamping jaw (1) according to one of claims 1 to 4, **characterised in that** the clamping inserts (5) are held on the base body (3) by a notch (16) pressed into the base body (3).

6. Clamping jaw (1) according to one of claims 1 to 5, **characterised in that** the receiving openings (4) are configured as inclined blind holes.

7. Clamping jaw (1) according to one of claims 1 to 6, **characterised in that** an ejection bore (17) is provided at the receiving openings (4).

8. Clamping jaw (1) according to one of claims 1 to 7, **characterised in that** the clamping inserts (5) designed as cylindrical pins have a flat outer end-face surface (13).

9. Clamping jaw (1) according to one of claims 1 to 8, **characterised in that** the base body (3) contains a support surface (7) to support the workpiece (2) below the clamping inserts (5).

10. Clamping jaw (1) according to one of claims 1 to 9, **characterised in that** the clamping inserts (5) are arranged in a concave plane (15).

11. Clamping jaw (1) according to one of claims 1 to 10, **characterised in that** the clamping inserts (5) are arranged in one row or several rows.

## Revendications

1. Mâchoire de serrage (1) pour le serrage d'une pièce à usiner (2), avec un corps de base (3) et plusieurs inserts de serrage (5) agencés dans des ouvertures de réception (4) du corps de base (3) qui sont réalisés sous la forme de tiges de cylindre faisant saillie par rapport à une surface frontale avant (8) du corps de base (3) et dépassant en biais vers le haut par rapport à une surface de base inférieure (6) du corps de base (3), **caractérisée en ce que** les inserts de serrage (5) réalisés comme tiges de cylindre se composent d'un matériau fritté et présentent sur leurs extrémités faisant saillie par rapport à la surface frontale avant (8) du corps de base (3) une arête (12) réalisée pour l'enfoncement des inserts de serrage (5) dans la pièce à usiner (2).

2. Mâchoire de serrage (1) selon la revendication 1, **caractérisée en ce que** les axes médians (11) des inserts de serrage (5) réalisés comme tiges de cylindre sont inclinés selon un angle de 40° à 60° par rapport à la surface de base (6) du corps de base (3).

3. Mâchoire de serrage (1) selon la revendication 1 ou 2, **caractérisée en ce que** les inserts de serrage (5) réalisés comme tiges de cylindre sont agencés dans plusieurs ouvertures de réception (4) obliques agencées les unes à côté des autres au niveau de la surface frontale (8) du corps de base (3).

4. Mâchoire de serrage (1) selon l'une quelconque des revendications 1 à 3, **caractérisée en ce que** les inserts de serrage (5) sont fixés par collage, brasage, pressage ou serrage dans les ouvertures de réception (4) du corps de base (3).

5. Mâchoire de serrage (1) selon l'une quelconque des revendications 1 à 4, **caractérisée en ce que** les inserts de serrage (5) sont maintenus par une encoche (16) enfoncée dans le corps de base (3) contre le corps de base (3).

6. Mâchoire de serrage (1) selon l'une quelconque des revendications 1 à 5, **caractérisée en ce que** les ouvertures de réception (4) sont réalisées comme trous borgnes obliques.

7. Mâchoire de serrage (1) selon l'une quelconque des revendications 1 à 6, **caractérisée en ce qu'**un perçage d'éjection (17) est prévu au niveau des ouvertures de réception (4).

8. Mâchoire de serrage (1) selon l'une quelconque des revendications 1 à 7, **caractérisée en ce que** les inserts de serrage (5) réalisés comme tiges de cylindre présentent une surface frontale extérieure plane (13).

9. Mâchoire de serrage (1) selon l'une quelconque des revendications 1 à 8, **caractérisée en ce que** le corps de base (3) contient en dessous des inserts de serrage (5) une surface d'appui (7) pour l'appui de la pièce à usiner (2).

10. Mâchoire de serrage (1) selon l'une quelconque des revendications 1 à 9, **caractérisée en ce que** les inserts de serrage (5) sont agencés dans un plan concave (15).

11. Mâchoire de serrage (1) selon l'une quelconque des revendications 1 à 10, **caractérisée en ce que** les inserts de serrage (5) sont agencés dans une rangée ou plusieurs rangées.
